Europäisches Patentamt

(19) European Patent Office　　(11) Numéro de publication:　　**0 120 116**

Office européen des brevets　　　　　　　　　　　　**A2**

⑫　**DEMANDE DE BREVET EUROPEEN**

(21) Numéro de dépôt: 83107777.1

(22) Date de dépôt: 08.08.83

(51) Int. Cl.³: **G 01 P 3/64**

(30) Priorité: **10.08.82 IT 949182**

(43) Date de publication de la demande:
**03.10.84  Bulletin  84/40**

(84) Etats contractants désignés:
AT BE CH DE FR GB LI NL SE

(71) Demandeur: **Sodi, Fiorello**
**Via Ugo Foscolo 5**
**I-50018 Scandicci Firenze(IT)**

(72) Inventeur: **Sodi, Fiorello**
**Via Ugo Foscolo 5**
**I-50018 Scandicci Firenze(IT)**

(74) Mandataire: **Lecca, Jean**
**CABINET PLASSERAUD 84, rue d'Amsterdam**
**F-75009 Paris(FR)**

(54) Equipement automatique pour les contrôles de la vitesse des véhicules automobiles en circulation, avec des moyens de sélection, en particulier pour la discrimination entre véhicules lourds et voitures automobiles.

(57) L'équipement de contrôle et de relèvement de la vitesse comprend un détecteur auxiliaire (7) disposé à un niveau suffisamment élevé – par rapport au plan (P)de la chaussée – pour qu'il ne soit pas intercepté par les véhicules (A) de petites dimensions (voitures automobiles et similaires), mais pour qu'il soit, en revanche, intercepté par les véhicules(M) – généralement plus lourds – ayant une hauteur supérieure à celle des voitures automobiles et similaires; ledit détecteur auxiliaire est positionné à l'intérieur de la base définie par deux détecteurs (1,3) constituant la base de mesure de la vitesse.

FIG.1

EP 0 120 116 A2

"Equipement automatique pour les contrôles de la vitesse des véhicules automobiles en circulation, avec des moyens de sélection, en particulier pour la discrimination entre véhicules lourds et voitures automobiles"

On connaît des équipements de type électronique avec des détecteurs le plus souvent de type optique (mais également d'autres types) pour le relèvement de la vitesse des véhicules automobiles et également, en particulier, pour signaler et, éventuellement, enregistrer des infractions pour excès de vitesse. Pour certains emplois, il est important de pouvoir opérer une sélection des véhicules en circulation, de façon à être en mesure de contrôler uniquement des types de véhicules déterminés, ou bien pour établir différents types d'indications en cas d'infractions, par exemple pour éviter d'enregistrer ou de signaler les vitesses des véhicules les plus petits, comme les automobiles, en exerçant le contrôle seulement sur les véhicules lourds, ou bien pour obtenir deux indications différentes de dépassement de vitesse (par exemple une vitesse maximale plus grande pour les véhicules légers et plus petite pour les véhicules lourds) ou encore pour obtenir une indication systématique de la vitesse des véhicules lourds et une indication discriminée pour les véhicules légers, le tout comme il est mieux précisé dans le texte ci-après.

Les équipements de contrôle et de relèvement de la vitesse peuvent normalement comprendre deux détecteurs successifs qui définissent la base du parcours le long duquel la vitesse est mesurée, ainsi qu'un troisième détecteur capable de discriminer et d'exclure toute éventuelle indication erronée due à la présence simultanée de véhicules circulant dans des sens opposés ou en dépassement; ce troisième détecteur se trouve le plus souvent à l'intérieur de la base définie par les deux premiers détecteurs et assez proche du deuxième détecteur.

L'équipement selon l'invention a pour but de permettre d'obtenir des discriminations adéquates dans les relèvements, surtout en fonction de la différence entre véhicules lourds et véhicules légers.

En substance, selon l'invention, il est prévu un détecteur auxiliaire disposé à un niveau suffisamment élevé - par rapport au plan de la chaussée - pour qu'il ne soit pas intercepté par les véhicules de petites dimensions (voitures automobiles et similaires), mais pour qu'il soit, en revanche, intercepté par des véhicules plus lourds, dont la hauteur est généralement sensiblement supérieure à celle des voitures automobiles et similaires.

Dans la pratique, ce détecteur auxiliaire est positionné à l'intérieur de la base définie par les deux premiers détecteurs.

L'équipement peut être complété, dans la partie électronique, par des moyens de discrimination pouvant effectuer des sélections différentes, par pré-disposition stable ou avec possibilité de commutation entre l'une et l'autre formes de discrimination. Dans la pratique, on peut avoir les cas suivants :

a) ledit détecteur auxiliaire exclut de la lecture et de l'indication et/ou enregistrement tous les véhicules qui ne peuvent pas intercepter ledit détecteur auxiliaire disposé au niveau élevé; dans ce cas, ne sont signalés que les véhicules lourds et pour ces derniers peut être obtenue une indication discriminante si le véhicule dépasse la vitesse limite imposée (par exemple 80 km/h);

b) ledit détecteur auxiliaire permet à l'équipement de sélectionner et signaler ou enregistrer uniquement les véhicules de faible encombrement qui dépassent une vitesse maximale imposée (par exemple 140 km/h), tout en signalant et en enregistrant la vitesse de tous les véhicules lourds qui interceptent ledit détecteur auxiliaire;

c) l'équipement est conçu pour la présentation de deux limites de vitesse, dont l'une est prévue pour signaler tous les véhicules dépassant la limite plus élevée, tandis que l'autre est prévue pour signaler le dépassement d'une vitesse maximale inférieure, seulement lorsque le véhicule en circulation a intercepté ledit détecteur auxiliaire et est donc un véhicule lourd.

Un senseur et un ensemble opérationnel peuvent être combinés avec des circuits de type déjà utilisé soit dans le cas d'emploi de cellules photoélectriques à contraste, soit dans celui de cellules photoélectriques à réflexion.

L'invention sera mieux comprise grâce à la description ci-après et au dessin ci-joint représentant un exemple pratique non limitatif de réalisation de l'invention.

Sur ce dessin:

la figure 1 représente un schéma d'installation des détecteurs selon l'invention;

la figure 2 représente un schéma à blocs faisant partie de l'équipement du type à réflexion; et

les figures 3 et 4 représentent des circuits associés, respectivement à des cellules photoélectriques à réflexion et à des cellules photoélectriques à contraste.

Sur le dessin, les références 1 et 3 désignent deux détecteurs à cellule photoélectrique disposés à un niveau limite par rapport au plan de la chaussée P, de façon à être interceptés non seulement par les véhicules lourds M, mais même par les véhicules de petites dimensions comme les voitures automobiles A; les deux détecteurs 1 et 3 sont placés à distance l'un de l'autre afin de constituer la base pour la mesure de la vitesse. Un troisième détecteur 5 est disposé entre les détecteurs 1 et 3 et se trouve, de préférence, assez près du détecteur 3 pour éliminer les erreurs dues à des cas spécifiques, comme celui des véhicules qui se croisent dans la zone de la base ou pour éliminer toute possibilité d'erreurs dans les relèvements. Ces trois détecteurs sont réalisés pour fonctionner de façon déjà connue.

Selon l'invention, il est prévu l'installation d'un quatrième détecteur auxiliaire 7 du même type que les précédents, mais disposé à un niveau plus élevé, de façon à ne pas être intercepté par les voitures automobiles A ou par des véhicules de dimensions limitées (auxquels sont imposées des limites de vitesse supérieures à celles des véhicules lourds), mais à être intercepté seulement par des véhicules lourds en circulation.

Le quatrième détecteur auxiliaire 7 est disposé pour obtenir la discrimination indiquée précédemment, soit de manière stable, soit de manière alternative à l'aide de moyens de commutation appropriés.

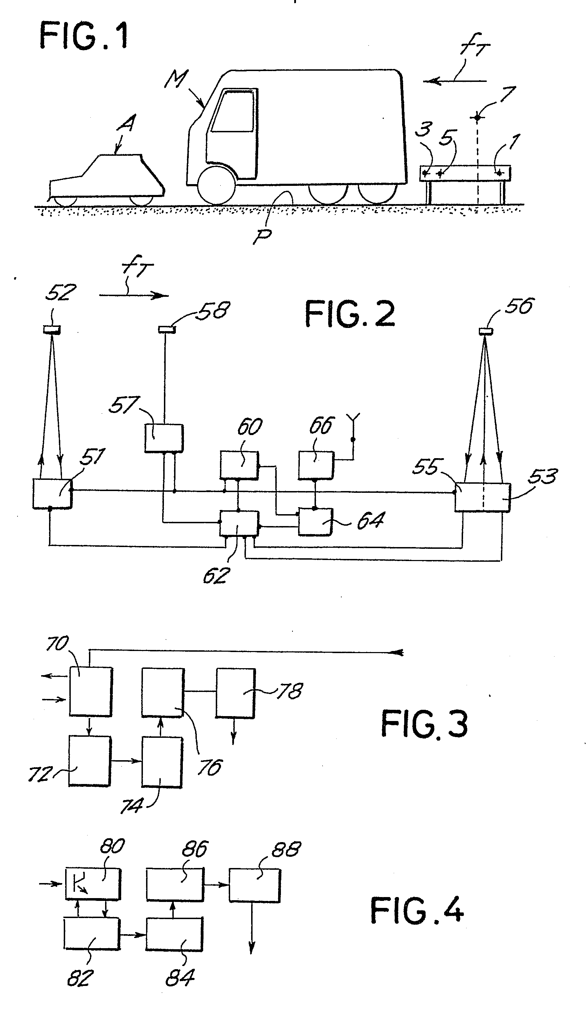

Sur les schémas des figures 2 et 3 est sommairement indiquée une réalisation, avec dispositif fonctionnant à réflexion, des détecteurs optiques à cellule photoélectrique; $f_T$ indique le sens de la circulation sous contrôle; 51 la cellule photoélectrique avec émetteur et récepteur du premier détecteur 1; et 52 le miroir réfléchissant. En 53 et 55 est indiquée une deuxième cellule photoélectrique avec un émetteur et deux récepteurs pour représenter respectivement le détecteur 3 qui, avec le détecteur 1, constitue la base de calcul, et le détecteur 5 servant à exclure les erreurs. En 56 est indiqué le miroir de réflexion pour les cellules photoélectriques 53, 55. Pour le détecteur surélevé 7 est prévue une cellule photoélectrique 57 avec miroir de réflexion 58.

Toutes les cellules photoélectriques sont alimentées avec énergie modulée, le plus souvent à onde carrée pour la sélectivité et la synchronisation. Sur le schéma à blocs de la figure 2, on indique en 60 le circuit logique et diviseur, en 62 le circuit séquentiel, en 64 le circuit de mémoire et limite de vitesse et en 66 le transmetteur. Sur la figure 3 est représenté un détail illustrant un émetteur et répéteur classique 70, relié au circuit logique ainsi qu'à un amplificateur 72; en 74 est indiqué un filtre de puissance, en 76 un trigger et en 78 un adaptateur d'impédance connecté à son tour au circuit séquentiel.

Sur la figure 4 est représenté un schéma analogue au schéma ci-dessus pour un système de relèvement à contraste, capable de relever toute variation rapide des conditions d'éclairage, qui sont toujours affectées par le passage d'un véhicule dans la zone d'un détecteur. Dans ce cas, l'élément senseur à cellule photoélectrique d'un détecteur est, dans la pratique, un phototransistor 80 relié à un amplificateur 82 avec A.G.C., suivi d'un trigger 84 et d'un retardateur 86, dont la sortie, par l'intermédiaire d'un adaptateur d'impédance 88, rejoint le circuit séquentiel.

Avec la disposition décrite ci-dessus, on peut obtenir des discriminations diverses, en exploitant ledit détecteur auxiliaire à niveau élevé, comme indiqué en 7.

Il est entendu que le dessin ne représente qu'un exemple donné seulement à titre de démonstration pratique de l'invention, celle-ci pouvant varier en ce qui concerne les formes et les dispositions, à condition de ne pas sortir du cadre de principe sur lequel se fonde ladite invention.

6

REVENDICATIONS

1. Equipement de contrôle et de relèvement de la vitesse, en particulier du type avec deux détecteurs successifs qui définissent la base du parcours le long duquel est mesurée la vitesse et, éventuellement, avec un troisième détecteur prévu pour discriminer et exclure toute éventuelle indication erronée due à la présence simultanée de véhicules circulant dans des sens opposés et en dépassement, caractérisé par le fait qu'il comprend un détecteur auxiliaire disposé à un niveau suffisamment élevé - par rapport au plan de la chaussée - pour qu'il ne soit pas intercepté par des véhicules de petites dimensions (voitures automobiles et similaires), mais pour qu'il soit, en revanche, intercepté par des véhicules - généralement plus lourds - ayant une hauteur supérieure à celle des voitures automobiles et similaires.

2. Equipement conforme à la revendication 1, caractérisé par le fait que ledit détecteur auxiliaire est positionné à l'intérieur de la base définie par les deux premiers détecteurs.

3. Equipement conforme aux revendications 1 et 2, caractérisé par le fait qu'il comprend, dans la partie électronique, des moyens de discrimination pour exclure de l'indication et/ou de l'enregistrement tous les véhicules n'étant pas en mesure d'intercepter ledit détecteur auxiliaire disposé à un niveau élevé et pour signaler seulement les véhicules lourds dépassant une vitesse limite imposée.

4. Equipement conforme à la revendication 3, caractérisé par le fait qu'il comprend des moyens de discrimination pour sélectionner et enregistrer les véhicules de petites dimensions dépassant une vitesse maximale imposée, ainsi que tous les véhicules lourds qui interceptent ledit détecteur auxiliaire.

5. Equipement conforme à la revendication 1, caractérisé par le fait qu'il comprend des moyens de discrimination avec présentation de deux limites de vitesse, dont l'une est prévue pour signaler tous les véhicules dépassant une limite supérieure, tandis que l'autre est prévue pour signaler le dépassement d'une vitesse maximale inférieure seulement lorsque le véhicule en circulation a intercepté ledit détecteur auxiliaire et est donc un véhicule lourd.

6. Equipement automatique pour les contrôles de la vitesse des véhicules automobiles en circulation, avec des moyens de sélection, en particulier pour la discrimination entre véhicules lourds et voitures automobiles, le tout comme il a été décrit ci-dessus et représenté à titre d'exemple dans le dessin ci-joint.

0120116

1/1

FIG.1

FIG.2

FIG.3

FIG.4